# EUROPEAN PATENT SPECIFICATION

(11) **EP 1 422 966 B1**
(45) Date of publication and mention of the grant of the patent: **19.03.2008**
(21) Application number: 03015981.8
(22) Date of filing: 14.07.2003
(51) Int. Cl.: H04Q 11/00

(54) **Wavelength converter and optical cross-connect system using the same**
Wellenlängenumwandler und optisches Querverbindungssystem mit Verwendung derselben
Convertisseur de longueur d'onde et système de brassage optique l'utilisant

(30) Priority: 22.11.2002 KR 2002073163
(43) Date of publication of application: 26.05.2004
(73) Proprietor: SAMSUNG ELECTRONICS CO. LTD., Suwon-city, Kyungki-do (KR)
(72) Inventor: Shin, Hong-Seok, Samsung Electronics Co., Ltd., Suwon-city, Kyungki-do (KR); Hwang, Seong-Taek, Samsung Electronics Co., Ltd., Suwon-city, Kyungki-do (KR)
(74) Representative: Grünecker, Kinkeldey, Stockmair & Schwanhäusser Anwaltssozietät

(56) References cited:
- EP-A- 0 494 831
- US-A- 4 845 703
- US-B1- 6 404 940

## Description

The present invention relates to a wavelength converter and an optical cross-connect system using the same, and more particularly to an optical cross-connect system for enabling each wavelength converter to receive a necessary light source from a multi-wavelength light source.

Following the current trend of a rapid development of wavelength division multiplexing (WDM) techniques which provides several wavelengths within one optical fiber, it is now possible to transmit a plurality of storage data in large quantity using a single optical fiber in a very high-speed optical communication field. In the near future, it is anticipated that current linear or circular networks utilized for transmitting data via a fixed path of an optical communication network will be changed to "All Optical Transmission Networks" (AOTNs), which provides a means for dynamically reconstructing its own network configurations by diverting an optical path when necessary. Particularly, it is anticipated that a backbone network will be replaces with a mesh-type network based on Optical Cross-Connector (OXC) to provide reconstructions of circuit lines at each node.

Note that the optical cross-connector (OXC) can be implemented with an electric method or an optical method. The electric method converts an input optical signal into an electric signal using optic-to-electric conversion and performs a switching operation, then reconverts the electric signal back into an optical signal. In contrast, the optical method demultiplexes a wavelength-multiplexed optical signal received from an input link and switches the signal in wavelength units using a space switch. This type of an optical method is further classified into several sub-methods according to a wavelength converter (WC). For example, one such sub-method is a wavelength interchanging cross-connector, known for ensuring the extensibility of a routing algorithm as well as lowering the probability of a channel blocking by a wavelength converter.

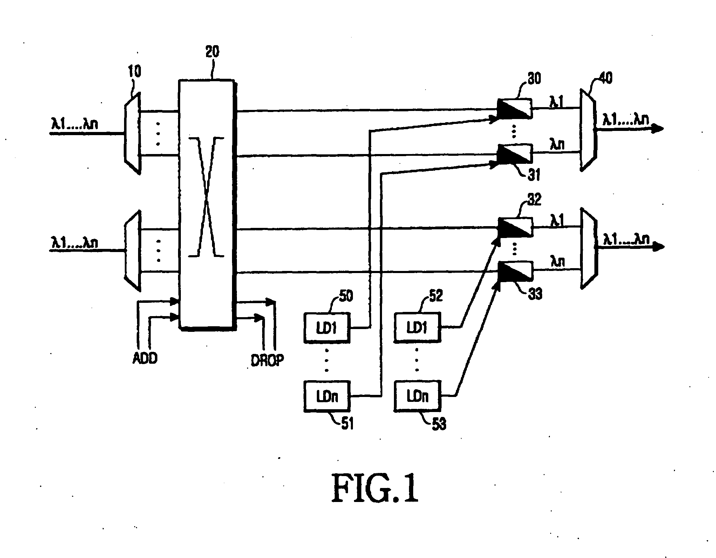

Figure 1 is a view illustrating a block diagram of a conventional wavelength interchanging cross-connector, at is e.g disclosed in US4845703. As shown, the conventional cross-connector includes a wavelength division demultiplexer 10, an optical space switch 20, a plurality of wavelength converters 30~33, a wavelength division multiplexer 40, and a plurality of wavelength light sources 50~53. In Fig. 1, a reference character ADD denotes the added signal channels, and the other reference character DROP denotes the dropped signal channels.

In operation, an incoming optical signal received via an input optical fiber is wavelength demultiplexed by the wavelength-division-demultiplexer 10, then cross-connected by the optical space switch 20. The cross-connected optical signal is wavelength-converted by the wavelength converters 30~33, then applied to and multiplexed by the wavelength-division-multiplexer 40, thus generating multiplexed optical signal on an output optical fiber. The optical cross-connector has a plurality of input links such that the number of optical signal channels having each of the wavelengths is same as the number of links. However, if at least two wavelengths are routed to one common output link, a line contention occurs. To solve this problem, if a wavelength conversion towards an unused wavelength is provided at a link to be outputted, the network availability increases. Therefore, a wavelength converter is mounted to each channel of the wavelength division multiplexer 40 to increase the network availability.

However, the aforementioned conventional wavelength interchanging cross-connector enables each of the wavelength converters 30~33 to receive a light source corresponding to a wavelength of the wavelength division multiplexer 40 using a plurality of individual light sources 50~53. As such, the system further requires a light source stabilizer. Moreover, as the conventional wavelength interchanging cross-connector mounts a number of light sources for different wavelengths, the system requires a number of wavelength converter models.

Accordingly, there is a need to provide an improved cross-connect system so that additional components required to achieve the conversion of wavelengths can be minimized.

An object of the present invention is to provide a wavelength converter and an optical cross-connect system using the same for enabling one multi-wavelength light source to provide each wavelength converter with the necessary tuned wavelength, without using individual light sources with different wavelengths for each wavelength of a multiplexer as in the prior art system.

One aspect of the present invention is to provide a wavelength converter using a multi-wavelength light source which includes: a wavelength division multiplexer for dividing input optical signals into wavelength units or collecting the divided wavelength-unit optical signals; a wavelength converter for performing a wavelength conversion on input multi-channel optical signal; a multi-wavelength light source for generating a multi-wavelength optical signal needed to perform the wavelength conversion of the wavelength converter; a first optical circulator for transmitting the multi-wavelength optical signal to the wavelength division multiplexer and for outputting a transmission optical signal generated from the wavelength division multiplexer to an output link; and, a second optical circulator for providing a single-wavelength light source demultiplexed by the wavelength division multiplexer as a tuned wavelength needed to perform the wavelength conversion of the wavelength converter and for outputting a wavelength-converted transmission optical signal generated from the wavelength converter to the wavelength division multiplexer.

Another aspect is to provide a wavelength interchanging cross-connector, which includes: first and second wavelength division multiplexers for dividing input optical signals for all directions into wavelength units, or collecting the divided wavelength-unit optical signals; a space switch for switching input signals with different wavelengths via the first wavelength division multiplexer; a wavelength converter for performing a wavelength conversion on the switched signals to be converted into signals corresponding to each wavelength of the second wavelength division multiplexer; a multi-wavelength light source for generating a multi-wavelength optical signal needed to perform the wavelength conversion of the wavelength converter; a first optical circulator for transmitting the multi-wavelength optical signal to the second wavelength division multiplexer and for outputting a transmission optical signal generated from the second wavelength division multiplexer to an output link; and, a second optical circulator for providing the multi-wavelength optical signal demultiplexed by the second wavelength division multiplexer as a tuned wavelength needed to perform the wavelength conversion of the wavelength converter and for outputting a wavelength-converted transmission optical signal generated from the wavelength converter to the wavelength division multiplexer.

The above features and other advantages of the present invention will be more clearly understood from the following detailed description taken in conjunction with the accompanying drawings, in which:
Fig. 1 is a view illustrating a block diagram of a conventional wavelength interchanging cross-connector; and,
Fig. 2 is a view illustrating a block diagram of a wavelength interchanging cross-connector in accordance with a preferred embodiment of the present invention.

Now, preferred embodiments of the present invention will be described in detail with reference to the annexed drawings. In the drawings, the same or similar elements are denoted by the same reference numerals even though they are depicted in different drawings. For the purposes of clarity and simplicity, a detailed description of known functions and configurations incorporated herein will be omitted as it may make the subject matter of the present invention rather unclear.

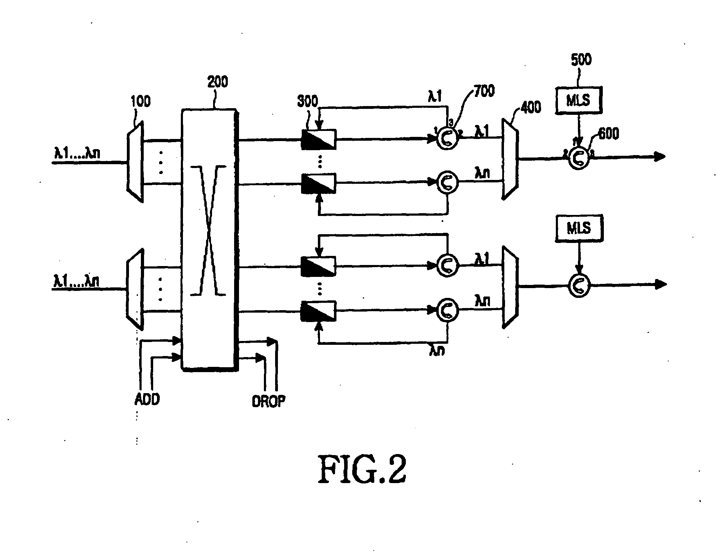

Figure. 2 is a view illustrating a block diagram of a wavelength interchanging cross-connector in accordance with a preferred embodiment of the present invention.

As shown, the inventive wavelength interchanging cross-connector comprises two input terminals and two output terminals and includes two 1xN wavelength-division-demultiplexers 100, an optical space switch 200, 2N number of wavelength converters 300, two Nx1 wavelength division multiplexers 400, two multi-wavelength light sources 500, two first optical circulators 600, and 2N number of second optical circulators 700.

In operation, the 1xN wavelength-division-demultiplexer 100 demultiplexes incoming optical signals containing different wavelengths into respective e 1~N wavelengths and outputs the separated signal channels to the optical space switch 200. In the embodiment, a waveguide grating may be adapted as the wavelength division demultiplexer 100.

The optical space switch 200 is configured to switch each connection state of the signal channels received from the wavelength-division-demultiplexer 100 to the corresponding 2N number of wavelength converters 300.

The 2N number of wavelength converters 300 receive a tuned wavelength that is needed for a wavelength conversion from an external source and convert each wavelength of signal channels received from the optical space switch 200 into a corresponding wavelength of the Nx1 wavelength division multiplexer 400. In this case, the 2N number of wavelength converters 300 receive a tuned wavelength of a wavelength converter from the multi-wavelength light source 500 to perform such a wavelength conversion toward a corresponding wavelength of the Nx1 wavelength division multiplexer 400, and its detailed description will be described with reference to the optical cross-connector later.

The Nx1 wavelength-division-multiplexer 400 multiplexes the transmission signal channels received from the wavelength converters 300, and at the same time, divides the multi-wavelength optical signal received from the multi-wavelength light source 500 in wavelength units.

The multi-wavelength light source 500 generates a multi-wavelength optical signal.

The first optical circulator 600 includes first to third ports 1~3, outputs the multi-wavelength optical signal received from the first port 1 to the Nx1 wavelength division multiplexer 400 connected to the second port 2, and outputs the wavelength-division-multiplexed transmission optical signal received from the Nx1 wavelength division multiplexer 400 via the first port 1 to an output terminal connected to the third port 3.

Similarly, the second optical circulator 700 includes first to third ports 1~3, outputs the wavelength-converted transmission signal channel received from the first port 1 to the Nx1 wavelength division multiplexer 400 connected to the second port 2, and outputs the multi-wavelength optical signal demultiplexed by the Nx1 wavelength division multiplexer 400 to the wavelength converter 300 connected to the third port 3.

Now, the operations of the optical cross-connector will be described hereinafter.

As shown in Fig. 2, an optical signal where 1~N wavelengths are division-multiplexed is divided into signal channels corresponding to individual wavelengths by the 1xN wavelength division demultiplexer 100, then routed along with an added channel ADD to the corresponding node in a direction indicated by the optical space switch 200. At this time, the routed signal channels must be converted into each allocation wavelength of the Nx1 wavelength division multiplexer 400 before they reach the Nx1 wavelength division multiplexer 400. For this purpose, the routed signal channels are applied to the 2N number of wavelength converters 300. The 2N number of wavelength converters 300 receives a tuned wavelength needed for a wavelength conversion from the external source, then proceed to convert each wavelength of the signal channels. In this case, the 2N number of wavelength converters 300 respectively receives the necessary tuned wavelength from the multi-wavelength light source 500 in accordance with a preferred embodiment of the present invention.

The multi-wavelength optical signal containing no information is generated from the multi-wavelength light source 500. The generated signal is applied to the Nx1 wavelength division multiplexer 400 connected to the second port 2 via the first port 1 of the optical circulator 700, then demultiplexed into individual wavelengths and applied to the wavelength converter 300 connected to the third port 3 via the second port 2 of the optical circulator 700. The applied wavelength is used as a tuned wavelength for wavelength conversion of the routed signal channels.

The signal channels routed at the optical space switch 200 are wavelength-converted and applied to the Nx1 wavelength division multiplexer 400 connected to the second port 2 via the first port 1 of the optical circulator 700, then multiplexed by the Nx1 wavelength division multiplexer 400. The multiplexed signals are forwarded to an output link connected to the third port 3 via the second port 2 of the three-terminal optical circulator 600.

Accordingly, using the above procedures, information of a desired channel is converted into that of a desired wavelength so that an optical switching operation can be performed.

As apparent from the above description, a wavelength converter and an optical cross-connect system using the same according to the present invention do not require additional wavelength converters for each wavelength of a multiplexer as the inventive system enables one multi-wavelength light source to provide each wavelength converter with the necessary tuned wavelength. As a result, the complexity of the optical stabilizer circuit are reduced which in tum reduces the cost of production according to the teachings of the present invention.

## Claims

1. A wavelength converter using a multi-wavelength light source, comprising:
at least one multi-wavelength light source (500) for generating a multi-wavelength optical signal;
at least one wavelength-division-multiplexer (400) for multiplexing optical signals having a plurality of wavelengths in a forward direction and for demultiplexing the multi-wavelength optical signal in a reverse direction;
at least one wavelength converter (300) for performing a wavelength conversion using the multi-channel optical signal generated by the multi-wavelength light source (500);
a first optical circulator (600) for transmitting the multi-wavelength optical signal to the wavelength-division multiplexer (400); and,
a second optical circulator (700) coupled between the wavelength converter (300) and the wavelength-division-multiplexer (400) for providing the multi-wavelength optical signal demultiplexed by the wavelength-division-multiplexer (400) as a tuned wavelength needed to perform the wavelength conversion by the wavelength converter (300).

2. The wavelength converter of Claim 1, wherein the first circulator (600) is further operative to transmit the output signals from the wavelength-division-multiplexer (400) to an output link for a subsequent transmission.

3. The wavelength converter of Claim 1, wherein the second circulator (700) is further operative to output a wavelength-converted transmission signal generated by the wavelength converter (300) to the wavelength-division-multiplexer.

4. A wavelength interchanging cross-connector, comprising:
a wavelength converter according to one of claims 1 - 3;
at least one wavelength-division-demultiplexer (100) for dividing incoming optical signals into a plurality of different wavelengths;
a switch (200) for switching output signals from the wavelength-division-multiplexer according to predetermined criteria for a subsequent transmission via the wavelength division multiplexer, wherein said at least one wavelength converter (300) performs a wavelength conversion on the output signals from the switch.

5. The cross-connector of Claim 4, wherein the wavelength-division-demultiplexer (100) comprises a waveguide grating.

## Patentansprüche

1. Wellenlängen-Umwandlungsvorrichtung, die eine Mehrfachwellenlängen-Lichtquelle verwendet, wobei sie umfasst:
wenigstens eine Mehrfachwellenlängen-Lichtquelle (500) zum Erzeugen eines optischen Mehrfachwellenlängen-Signals;
wenigstens eine Wellenlängen-Multiplexiereinrichtung (400), die Multiplexieren optischer Signale mit einer Vielzahl von Wellenlängen in einer Vorwärtsrichtung durchführt und Demutliplexieren des optischen Mehrfachwellenlängen-Signals in einer Rückwärtsrichtung durchführt;
wenigstens eine Wellenlängen-Umwandlungseinrichtung (300), die Wellenlängen-Umwandlung unter Verwendung des optischen Mehrkanal-Signals durchführt, das von der Mehrfachwellenlängen-Lichtquelle (500) erzeugt wird;
einen ersten optischen Zirkulator (600), der das optische Mehrfachwellenlängen-Signal zu der Wellenlängen-Multiplexiereinrichtung (400) sendet; und
einen zweiten optischen Zirkulator (700), der zwischen die Wellenlängen-Umwandlungseinrichtung (300) und die Wellenlängen-Multiplexiereinrichtung (400) gekoppelt ist, um das durch die Wellenlängen-Multiplexiereinrichtung (400) Demultiplexieren unterzogene optische Mehrfachwellenlängen-Signal als eine abgestimmte Wellenlänge bereitzustellen, die erforderlich ist, um die Wellenlängen-Umwandlung mit der Wellenlängen-Umwandlungseinrichtung (300) durchzuführen.

2. Wellenlängen-Umwandlungseinrichtung nach Anspruch 1, wobei der erste Zirkulator (600) des Weiteren in Funktion die Ausgangssignale von der Wellenlängen-Multiplexiereinrichtung (400) zum anschließenden Senden zu einer Ausgabeverbindung (output link) sendet.

3. Wellenlängen-Umwandlungsvorrichtung nach Anspruch 1, wobei der zweite Zirkulator (700) des Weiteren in Funktion ein Sendesignal mit umgewandelter Wellenlänge, das von der Wellenlängen-Umwandlungsvorrichtung ausgegeben wird, an die Wellenlängen-Multiplexiereinrichtung ausgibt.

4. Wellenlängenwechsel-Querverbinder (wavelength interchanging cross-connector), der umfasst:
eine Wellenlängen-Umwandlungsvorrichtung nach einem der Ansprüche 1-3; wenigstens eine Wellenlängen-Demultiplexiereinrichtung (100) zum Teilen eingehender optischer Signale in eine Vielzahl unterschiedlicher Wellenlängen;
einen Switch (200), der Ausgangssignale von der Wellenlängen-Multiplexiereinrichtung entsprechend vorgegebenen Kriterien für ein anschließendes Senden über die Wellenlängen-Multiplexiereinrichtung schaltet, wobei die wenigstens eine Wellenlängen-Umwandlungseinrichtung (300) eine Wellenlängen-Umwandlung an den Ausgangssignalen von dem Switch durchführt.

5. Querverbinder nach Anspruch 4, wobei die Wellenlängen-Demultiplexiereinrichtung (100) ein Wellenleiter-Gitter umfasst.

## Revendications

1. Convertisseur de longueur d'onde utilisant une source de lumière à longueurs d'ondes multiples, comportant :
au moins une source (500) de lumière de longueurs d'ondes multiples destinée à générer un signal optique de longueurs d'ondes multiples ;
au moins un multiplexeur (400) à division de longueur d'onde destiné à multiplexer des signaux optiques ayant de multiples longueurs d'ondes dans un sens aller et à démultiplexer le signal optique de longueurs d'ondes multiples dans un sens retour ;
au moins un convertisseur (300) de longueur d'onde destiné à effectuer une conversion de longueur d'onde en utilisant un signal optique multicanaux généré par la source (500) de lumière à longueurs d'ondes multiples ;
un premier circulateur optique (600) destiné à transmettre le signal optique de longueurs d'ondes multiples au multiplexeur (400) à division de longueur d'onde ; et
un second circulateur optique (700) couplé entre le convertisseur (300) de longueur d'onde et le multiplexeur (400) à division de longueur d'onde pour produire le signal optique de longueurs d'ondes multiples démultiplexé par le multiplexeur (400) à division de longueur d'onde sous la forme d'une longueur d'onde accordée nécessaire pour exécuter la conversion de longueur d'onde par le convertisseur (300) de longueurs d'ondes.

2. Convertisseur de longueur d'onde selon la revendication 1, dans lequel le premier circulateur (600) peut fonctionner en outre pour transmettre les signaux de sortie du multiplexeur (400) à division de longueur d'onde à un lien de sortie pour une transmission subséquente.

3. Convertisseur de longueur d'onde selon la revendication 1, dans lequel le second circulateur (700) peut en outre être mis en oeuvre pour délivrer en sortie un signal de transmission converti en longueur d'onde généré par le convertisseur (300) de longueur d'onde au multiplexeur à répartition par longueurs d'ondes.

4. Connecteur de branchement échangeant des longueurs d'ondes, comportant :
un convertisseur de longueur d'onde selon l'une des revendications 1 à 3 ;
au moins un démultiplexeur (100) à répartition par longueurs d'ondes destiné à répartir des signaux optiques arrivant en de multiples longueurs d'ondes différentes ;
un commutateur (200) destiné à commuter des signaux de sortie du multiplexeur à répartition par longueurs d'ondes conformément à des critères prédéterminés pour une émission ensuite par l'intermédiaire du multiplexeur à répartition par longueurs d'ondes, dans lequel ledit, au moins un, convertisseur (300) de longueur d'onde exécute une conversion de longueur d'onde sur les signaux de sortie du commutateur.

5. Connecteur de branchement selon la revendication 4, dans lequel le démultiplexeur (100) à répartition par longueurs d'ondes comporte un réseau guide d'ondes.
